# FASCICULE DE BREVET EUROPEEN

(11) **EP 1 926 693 B1**
(45) Date de publication et mention de la délivrance du brevet: **14.11.2018**
(21) Numéro de dépôt: 06808110.8
(22) Date de dépôt: 12.09.2006
(51) Int. Cl.: C04B 26/02, E04F 13/02

(54) **ENDUIT DE JOINTOIEMENT ET DE SURFACAGE POUR ELEMENTS DE CONSTRUCTION, SON PROCEDE DE PREPARATION ET PROCEDE DE REALISATION D'UN OUVRAGE**
FUGENFÜLL- UND OBERFLÄCHENBESCHICHTUNGSMATERIAL FÜR BAUELEMENTE, VERFAHREN ZU DEREN HERSTELLUNG UND KONSTRUKTIONSVERFAHREN FÜR EINE STRUKTUR
JOINTING AND SURFACE COATING MATERIAL FOR BUILDING ELEMENTS, METHOD FOR PREPARING SAME AND METHOD FOR CONSTRUCTING A STRUCTURE

(30) Priorité: 12.09.2005 FR 0509259
(43) Date de publication de la demande: 04.06.2008
(73) Titulaire: Siniat, 84915 Avignon Cedex 9 (FR)
(72) Inventeur: PETIT, Alain, F-84800 Isle sur Sorgue (FR); DOMENECH, Marc, F-84210 La Roque Sur Pernes (FR)
(74) Mandataire: Vaeck, Elke
(86) Numéro de dépôt international: PCT/FR2006/002084
(87) Numéro de publication internationale: WO 2007/031636

(56) Documents cités:
- WO-A-02/06183
- US-A- 4 294 622
- US-A- 5 852 063
- RENNEN H ET AL: "VERWENDUNG VON RAUCHGASGIPS (REA-GIPS) FUR DIE HERSTELLUNG VON GIPSKARTONPLATTEN" ZKG INTERNATIONAL, BAUVERLAG BV., G]TERSLOH, DE, vol. 42, no. 5, 1 mai 1989 (1989-05-01), pages 217-222, XP000026218 ISSN: 0949-0205
- RETTI, K.: "Wallboard taping process, apparatus and compositions" CHEMICAL ABSTRACTS + INDEXES, AMERICAN CHEMICAL SOCIETY. COLUMBUS, US, vol. 118, no. 16, 19 avril 1993 (1993-04-19), page 357, XP000391728 ISSN: 0009-2258 & CA 2 041 860 A1 (RETTI, KAHRL) 7 novembre 1992 (1992-11-07)

## Description

### DOMAINE DE L'INVENTION.

La présente invention concerne un enduit de jointoiement pour des éléments de construction, en particulier des plaques de plâtre à parement en papier, ainsi qu'un procédé de réalisation d'un ouvrage tel qu'une cloison, un habillage mural ou un plafond. L'invention est relative à un enduit de séchage dit "ready-mix". L'enduit selon l'invention est de préférence un enduit "2-en-1", à savoir un enduit qui réalise à la fois les fonctions de remplissage et de finition.

### ARRIERE-PLAN TECHNOLOGIQUE.

Il est bien connu d'utiliser des plaques de plâtre pour réaliser des cloisons, des habillages d'éléments verticaux ou inclinés ou pour réaliser des plafonds suspendus ou non.

Ces plaques sont généralement constituées d'une âme essentiellement en plâtre, recouverte sur chacune de ses faces par une feuille servant la fois d'armature et de parement et qui peut être constituée de carton ou de fibres minérales.

De façon générale, on assemble des plaques de plâtre avec un premier enduit et on finit les joints entre les plaques avec un enduit complémentaire. Un enduit de remplissage (ou aussi appelé de bouchage) est utilisé en complément de la bande, et en général présente un retrait relativement faible, un bon collage et une bonne adhérence de la bande à joint. Un enduit de finition est utilisé lors de la dernière passe pour finir l'ouvrage afin que celui-ci présente une surface monolithique.

On utilise de plus en plus souvent des enduits de séchage qui remplissent les différentes fonctions en même temps. Ces enduits sont dits "2-en-1", à savoir un enduit qui réalise à la fois les fonctions de remplissage et de finition. En outre, on utilise aussi des enduits à séchage livrés en pots avec l'eau qui s'élimine par la suite; de tels enduits sont qualifiés de "ready-mix".

Il existe toujours un besoin pour un enduit qui présente de bonnes qualités d'application sur le support et de maniabilité.

WO 02/06183 A décrit un enduit de séchage comprenant une charge minérale tel que carbonate de calcium, sulfate de calcium anhydride ou dihydraté ayant un diamètre moyen D₅₀ entre 5 et 35 µm.

### RESUME DE L'INVENTION.

L'invention a donc pour objet un enduit de séchage comprenant, en pourcentages massiques rapportés à la masse totale d'enduit, de 0.5 à 20 % en poids d'un liant organique, de 50 à 85% de gypse FGD présentant les caractéristiques granulométriques suivantes: (i) un d₅₀ compris entre 35 et 70*µ*m (de préférence entre 36 et 70*µ*m, avantageusement entre 37 et 70*µ*m) et (ii) un span (d₉₀ - d₁₀/d₅₀) inférieur à 2.

L'invention a aussi pour objet un procédé de préparation de l'enduit selon l'invention dans lequel on mélange les constituants de l'enduit dans un ordre quelconque.

Enfin, l'invention a pour objet un procédé de réalisation d'un ouvrage, comprenant la juxtaposition de plaques de plâtre présentant un parement de préférence en papier, éventuellement la pose d'une bande, et le recouvrement du joint entre les plaques au moyen d'un enduit selon l'invention.

L'invention fournit un enduit qui présente une bonne ouvrabilité. L'ouvrabilité peut se décomposer en deux parties, la première partie étant reliée au seuil d'écoulement de l'enduit, à savoir l'énergie nécessaire pour appliquer l'enduit, et la seconde partie étant la glisse après le seuil d'écoulement. Une bonne glisse est particulièrement recherchée.

### DESCRIPTION DETAILLEE DE L'INVENTION.

### Enduit selon l'invention

L'enduit selon l'invention comprend, ainsi qu'il a été indiqué, une charge minérale qui est la caractéristique principale de cet enduit. Cette charge minérale est un gypse dit FGD, (Flue Gas Desulfuration) présentant les caractéristiques suivantes: (i) un d₅₀ compris entre 35 et 70*µ*m et (ii) un span (d₉₀ - d₁₀/d₅₀) inférieur à 2. La valeur de span caractérise une distribution granulométrique très étroite. Pour mémoire, on rappellera qu'un calcaire classiquement utilisé comme charge dans les enduits présente (i) un d₅₀ compris entre 15 et 30*µ*m et (ii) un span (d₉₀ - d₁₀/d₅₀) compris entre 2 et 4 On peut utiliser un gypse FGD tel qu'obtenu directement en sortie de l'unité de désulfuration, ces gypses présentant en général la granulométrie requise.

On rappellera la définition de d₅₀, abrégé de d(v,50), qui est la taille de particule à laquelle 50% de l'échantillon a une taille inférieure et 50% de l'échantillon a une taille supérieure. Cette valeur est aussi connue sous le nom de MMD (Mass Médian Diameter), les valeurs en masse et volume étant les mêmes, simplement dérivées l'une de l'autre par la masse volumique. La valeur de d₁₀ est la taille de particule pour laquelle 10% de l'échantillon se trouve en dessous de cette dimension. La valeur de d₉₀ est la taille de particule pour laquelle 90% de l'échantillon se trouve en dessous de cette dimension.

La quantité de charge de FGD selon l'invention est typiquement comprise entre 50 et 85% du poids total de l'enduit, de préférence 55 à 75%.

La charge minérale est la caractéristique principale de l'enduit selon l'invention. Les autres composants sont classiques dans le domaine des enduits de séchage; la balance comprenant de l'eau et éventuellement d'autres composants.

On peut utiliser aussi une charge minérale complémentaire, qui peut être toute charge minérale habituellement employée pour la fabrication d'un enduit de jointoiement. Comme exemple de telle charge minérale complémentaire, on peut citer carbonate de calcium, sulfate de calcium anhydre ou dihydraté, carbonate de magnésium, dolomie, silices, silicates, aluminates ou autres. De façon préférée, le gypse FGD et/ou avec une granulométrie spécifique est le seul utilisé.

On peut aussi utiliser une charge légère (dite "light weight aggregate") si on le souhaite. A titre d'exemple, on peut utiliser la perlite, notamment expansée et en particulier hydrophobée (notamment avec présente un d50 compris entre 20 et 100 microns).

Le liant utilisé est un liant classique dans l'art des enduits, dispersable en phase aqueuse. Il peut se présenter sous la forme d'un extrait sec ou sous forme, par exemple de latex, à 50% dans l'eau. A titre d'exemple de tels liants, on peut mentionner les homopolymères d'alcool polyvinylique, les homopolymères acétates de polyvinyle (plastifiés ou non), les copolymères éthylène/acétate de vinyle (EVA) plastifiés ou non), éthylène/versatate de vinyle, acétate de vinyle/versatate de vinyle, polyacryliques, copolymères acétate de vinyle/acryliques, copolymères styrèniques/acryliques, styrène/butadiène, les terpolymères acétate de vinyle/versatates de vinyle /maléates de vinyle, acétate de vinyle/versatate de vinyle/acryliques, terpolymère vinyl acétate/vinyl ester d'un acide (à chaîne longue)/ester d'acide acrylique, les terpolymères acryliques et leurs mélanges. On pourra ainsi utiliser des combinaisons de liants: co- ou terpolymère acétate de vinyle/copolymère vinylique et copolymère vinylique/copolymère styrènique/acrylique. Lorsque ces polymères sont fournis, ils le sont soit sous forme de poudre, soit sous forme de dispersion dans l'eau (en général selon un taux d'environ 50%).

La proportion de liant organique est de 0.5 à 20% en poids, préférentiellement entre 1 et 8% du poids total de l'enduit.

Outre les éléments indiqués ci-dessus, l'enduit comprend généralement un ou plusieurs des autres composants suivants:
- un agent glissant en une quantité par exemple de 0,5 à 10%, de préférence de 1 à 5%; cet agent glissant peut être un agent silicaté (différent de la charge minérale) notamment une argile (de type attapulgite) ou il peut être tout agent glissant connu; cet agent est notamment une argile et/ou du talc et/ou du mica;
- un agent de maniabilité qui est un agent rétenteur d'eau et épaississant, en une quantité par exemple de 1 à 15‰; cet agent rétenteur d'eau peut être un dérivé de cellulose (éther cellulosique) tel que de la méthylhydroxyéthylcellulose;
- un agent anti-mousse, en une quantité par exemple de 1 à 15‰; cet agent anti-mousse est par exemple un tensio-actif non-ionique;
- un agent hydrophobe en une quantité par exemple de 1 à 15‰; cet agent peut être notamment un acide gras, un sel d'acide gras, une cire ou un dérivé siliconé; on met en oeuvre de préférence comme acide gras, l'acide oléique ou l'acide stéarique; comme sel d'acide gras, on préfère les sels alcalins ou alcalino-terreux, en particulier les sels de sodium, de potassium, de magnésium ou de calcium; comme dérivé siliconé, on peut citer les siliconates, les silanes, les huiles de silicone hydrogénées, les émulsions de silicone, les émulsions amino-siliconées, les résines alkyl-siloxanes telles que l'hydrogénométhylpolysiloxane et le polydiméthylsiloxane aminé ainsi que leurs mélanges.
- de l'amidon et/ou un dérivé d'amidon, en une quantité en général comprise entre 0,05 et 5%, de préférence entre 0,1 et 1% du poids total de l'enduit;
- des biocides;
- des pigments et azurants optiques;
- des agents dispersants;
- des agents anti-gel;
- etc.

L'enduit selon l'invention présente une densité généralement comprise entre 1 et 1.8, de préférence entre 1.1 et 1.5.

L'enduit présente généralement une viscosité Brookfield de l'enduit comprise entre 200 000 et 800 000 cps, avantageusement entre 300 000 et 600 000 cps. Généralement, la variation entre la mesure à 1 jour et à 7 jours est relativement faible (ratio 7 jr/1 jr inférieur à 1.3).

L'enduit selon l'invention présente un pH par exemple 8 à 9,5.

L'enduit selon l'invention présente un extrait sec qui peut varier, par exemple de 60 à 85%, de préférence 70 à 80%.

L'enduit selon l'invention est un enduit dit de séchage ("ready-mix"). L'enduit selon l'invention est de préférence un enduit "2-en-1", à savoir un enduit qui réalise à la fois les fonctions de remplissage et de finition.

L'enduit selon l'invention présente, outre sa maniabilité (ouvrabilité) très bonne, une ou plusieurs des propriétés suivantes :
- une bonne adhérence sur le papier constituant le parement de la plaque de plâtre (il y a en fait rupture cohésive dans le plâtre de la plaque; il y délamination du papier de parement);
- un bon collage et une bonne adhérence de la bande à joint (il y a délamination de celle-ci);
- un retrait après séchage faible (par exemple moins de 20% tel que déterminé par le test de l'anneau);
- un ponçage aisé.

L'enduit selon l'invention peut être préparé par mélange de ses constituants dans un ordre quelconque, ou dans un ordre choisi.

### Procédé de construction selon l'invention

L'enduit selon l'invention peut être utilisé pour la réalisation, à l'aide de plaques de plâtre, de nombreux ouvrages tels que des cloisons, des habillages muraux ou des plafonds, suspendus ou non.

L'enduit selon l'invention convient en particulier à la réalisation d'ouvrage au moyen de plaques de plâtre à parement en papier.

La réalisation d'un ouvrage au moyen de plaques de plâtre comprend généralement la juxtaposition de plaques de plâtre, le remplissage de l'espacement entre les plaques au moyen d'un enduit de remplissage, la pose d'une bande (en général en papier), le recouvrement de la bande au moyen de l'enduit de remplissage, puis le recouvrement de l'enduit de remplissage avec un enduit de finition. Alternativement les étapes de remplissage de l'espacement entre les plaques au moyen d'un enduit de remplissage et la pose d'une bande peuvent être remplacées par la pose d'une bande de grille de verre auto-collante (sans couche préalable de remplissage).

L'enduit selon l'invention peut être l'enduit de remplissage et/ou l'enduit de finition. De préférence l'enduit selon l'invention est à la fois l'enduit de remplissage et l'enduit de finition (il s'agit alors d'un enduit 2-en-1).

Pour la réalisation des joints pour les bords amincis, on utilisera en général une bande de papier ou autre, classiquement utilisée, avec couche préalable de remplissage. Pour la réalisation de joints sur plaques à bords ronds, donc sans bande, l'enduit s'utilise de la même façon.

### EXEMPLES.

Les exemples suivants sont donnés à titre uniquement illustratif et n'ont aucun caractère limitatif.

Les données de granulométrie sont données en volume (ce qui équivaut à des données en masse), et mesurées avec un appareil Malvern® mastersizer S, optique 300RF et dispositif MS17, longueur rayon 2.4 mm. La mesure de granulométrie est mise en oeuvre par la voie dite humide avec ultra-sons. Cette voie consiste à diluer la charge dans un solvant (95% éthanol) et à appliquer des ultrasons (quelques minutes jusqu'à ce que l'échantillon soit acceptable, valeur "/div" inférieure à 20, de préférence inférieure à 10). L'échantillon est introduit jusqu'à une valeur "obscuration" d'environ 15%.

La viscosité est mesurée par un viscosimètre Brookfield (RVDVII+Pro) avec dispositif Helipath (laboratoire conditionné, conditions vitesse No. 2, broche en T No. D, mesure à 30 sec).

### Exemple 1.

Dans cet exemple, on détermine les caractéristiques de plusieurs gypses d'origine FGD. Les valeurs sont les suivantes:

| Gypse (origine) | d₅₀ | Span |
|---|---|---|
| US | 45.6 | 1.19 |
| Germany | 65.9 | 1.48 |
| China (1) | 39.9 | 1.87 |
| China (2) | 44.8 | 1.75 |

### Exemple 2.

Dans cet exemple, on réalise la composition dont les caractéristiques sont données dans le tableau ci-après (le gypse FGD est le gypse Germany):

| Composants | Quantité |
|---|---|
| Gypse FGD | 505 |
| Eau | 200 |
| Microbiocide | 0.48 |
| Tensio-actif non-ionique | 0.85 |
| Mica | 8 |
| Argile | 10 |
| Ether cellulosique | 3.2 |
| Amidon | 3 |
| Talc | 16.76 |
| EVA | 20 |

L'enduit est fabriqué par mélange de ses composants. La viscosité à un jour est de 410 000-430 000 cps, tandis que la viscosité à 7 jours est de 470 000-480 000 cps. La densité est comprise entre 1.23 et 1.25, et le pH est compris entre 8.8 et 8.73.

### Exemple 3.

Dans cet exemple, on étudie le comportement de deux enduits fabriqués à partir des FGD d'origine chine 1 et 2, la composition étant la même que dans l'exemple 2.

| | FGD Chine 2 | FGD Chine 1* |
|---|---|---|
| Aspect | Pâte brillante agréable | Pâte brillante agréable, légère mousse |
| Odeur | Aucune | Aucune |
| Couleur | Léger brun | Brun |
| Consistance | Très bonne, relativement coulante | Légèrement plus épaisse que pour l'autre enduit |
| Application | Excellente | Excellente |
| Rétention d'eau | Excellente | Excellente |
| Bande papier | Très facile | Très facile |
| Bande grille de verre | Excellent | Excellent |
| Remplissage | Excellent | Excellent |
| Retrait | Faible | Faible |
| Finition | Parfaite | Parfaite |
| aspect séché | Enduit se comporte comme auto-nivellant et son aspect est excellent | Enduit se comporte comme auto-nivellant et son aspect est excellent |
| Ponçage P 80 + P 150 | Facile, rapide et bon résultat | Facile, rapide et bon résultat |
| Adhésion de la bande papier | Délamination | Délamination |

| | | |
|---|---|---|
| * l'enduit contient 10 g d'eau supplémentaire. | | |

### Exemple 4.

Dans cet exemple, on étudie le comportement de deux enduits fabriqués à partir des FGD de la même origine Germany, dont les dates de prélèvement diffèrent. Les compositions sont identiques à celle de l'exemple 2, seule change la date de l'échantillon de gypse FGD.

| | Composition A | Composition B |
|---|---|---|
| Aspect | Pâte brillante agréable, légère mousse | Pâte brillante agréable, légère mousse |
| Odeur | Aucune | Aucune |
| Couleur | Léger brun | Léger Brun |
| Consistance | Très bonne | Légèrement plus épaisse que pour l'autre enduit |
| Application | Excellente | Excellente, avec légèrement plus d'énergie pour l'application |
| Rétention d'eau | Excellente | Excellente |
| Bande papier | Très facile | Très facile |
| Bande grille de verre | Excellent | Excellent |
| Remplissage | Excellent | Excellent |
| Retrait | Faible | Faible |
| Finition | Parfaite | Parfaite |
| aspect séché | Enduit se comporte comme auto-nivellant et son aspect est excellent | Enduit se comporte comme auto-nivellant et son aspect est excellent |
| Ponçage P 80 + P 150 | Facile, rapide et bon résultat | Facile, rapide et bon résultat |
| Adhésion de la bande papier | Délamination | Délamination |

## Revendications

1. Enduit de séchage comprenant, en pourcentages massiques rapportés à la masse totale d'enduit, de 0.5 à 20% en poids d'un liant organique, de 50 à 85% de gypse FGD présentant les caractéristiques granulométriques suivantes: (i) un d₅₀ compris entre 36 et 70µm et (ii) un span (d₉₀ - d₁₀/d₅₀) inférieur à 2.

2. Enduit selon la revendication 1, comprenant, en pourcentages massiques rapportés à la masse totale d'enduit, de 55 à 75% de gypse.

3. Enduit selon l'une des revendications 1 à 2, comprenant un liant en une quantité en poids entre 1 et 8% du poids total de l'enduit.

4. Enduit selon l'une des revendications 1 à 3, comprenant un liant choisi parmi les homopolymères d'alcool polyvinylique, les homopolymères acétates de polyvinyle (plastifiés ou non), les copolymères éthylène/acétate de vinyle (EVA plastifiés ou non), éthylène/versatate de vinyle, acétate de vinyle/versatate de vinyle, polyacryliques, copolymères acétate de vinyle/acryliques, copolymères styrèniques/acryliques, styrène/butadiène, les terpolymères acétate de vinyle/versatates de vinyle /maléates de vinyle, acétate de vinyle/versatate de vinyle/acryliques, les terpolymères acryliques et leurs mélanges.

5. Enduit selon l'une des revendications précédentes, comprenant en outre un agent glissant en une quantité de 0,5 à 10%, de préférence de 1 à 5%.

6. Enduit selon l'une des revendications précédentes, comprenant en outre un agent glissant comprenant une argile et/ou du talc et/ou du mica.

7. Enduit selon l'une des revendications précédentes, comprenant en outre un agent de maniabilité qui est un agent rétenteur d'eau et épaississant, en une quantité de 1 à 15‰.

8. Enduit selon l'une des revendications précédentes, comprenant en outre un agent de maniabilité qui est un agent rétenteur d'eau et épaississant, l'agent rétenteur d'eau étant un dérivé de cellulose.

9. Procédé de préparation d'un enduit selon l'une des revendications 1 à 8, dans lequel on mélange les constituants de l'enduit dans un ordre quelconque.

10. Procédé de réalisation d'un ouvrage, comprenant la juxtaposition de plaques de plâtre présentant un parement de préférence en papier, éventuellement la pose d'une bande, et le recouvrement du joint entre les plaques au moyen d'un enduit selon l'une des revendications 1 à 8.

11. Procédé selon la revendication 10, comprenant la juxtaposition des plaques de plâtre, le remplissage de l'espacement entre les plaques au moyen d'un enduit de remplissage, la pose d'une bande, le recouvrement de la bande au moyen de l'enduit de remplissage, puis le recouvrement de l'enduit de remplissage avec un enduit de finition, **caractérisé en ce que** l'enduit de remplissage et/ou l'enduit de finition est un enduit selon l'une des revendications 1 à 8.

12. Procédé selon la revendication 10, comprenant la juxtaposition des plaques de plâtre, la pose d'une bande de grille de verre auto-collante, le recouvrement de la bande au moyen de l'enduit de remplissage, puis le recouvrement de l'enduit de remplissage avec un enduit de finition, **caractérisé en ce que** l'enduit de remplissage et/ou l'enduit de finition est un enduit selon l'une des revendications 1 à 8.

13. Procédé selon la revendication 11 ou 12, dans lequel l'enduit selon l'une des revendications 1 à 8 est l'enduit de remplissage et l'enduit de finition.

## Patentansprüche

1. Trocknungsanstrich, umfassend, in Gewichtsprozent bezogen auf die Gesamtanstrichmasse, 0,5 bis 20 Gew.-% eines organischen Bindemittels, 50 bis 85 % REA-Gips mit folgenden granulometrischen Eigenschaften: (i) d₅₀ zwischen 36 und 70 µm und (ii) ein Span (d₉₀ - d₁₀/d₅₀) unter 2.

2. Anstrich nach Anspruch 1, der in Gewichtsprozent bezogen auf die Gesamtanstrichmasse 55 bis 75 % Gips umfasst.

3. Anstrich nach Anspruch 1 oder 2, der ein Bindemittel in einem Gewichtsanteil zwischen 1 und 8 % des Gesamtgewichts des Anstrichs umfasst.

4. Anstrich nach einem der Ansprüche 1 bis 3, der ein Bindemittel umfasst, das ausgewählt ist aus Polyvinylalkohol-Homopolymeren, Polyvinylacetat-Homopolymeren (mit oder ohne Weichmacher), EthylenVinylacetat-Copolymeren (EVA mit oder ohne Weichmacher), Ethylen-Vinylversatat, Vinylacetat-Vinylversatat, Polyacrylaten, Vinylacetat-Acrylat-Copolymeren, Styrol-Acrylat-Copolymeren, StyrolButadien, Vinylacetat-Vinylversatat-Vinylmaleat-Terpolymeren, Vinylacetat-Vinylversatat-Acrylaten, Acrylat-Terpolymeren und ihren Mischungen.

5. Anstrich nach einem der vorhergehenden Ansprüche, der ferner ein Glättungsmittel in einer Menge von 0,5 bis 10%, vorzugsweise von 1 bis 5% umfasst.

6. Anstrich nach einem der vorhergehenden Ansprüche, der ferner ein Glättungsmittel mit einem Ton und/oder Talk und/oder Glimmer umfasst.

7. Anstrich nach einem der vorhergehenden Ansprüche, der ferner ein Verarbeitungshilfsmittel, das ein Wasserrückhalte- und Verdickungsmittel ist, in einer Menge von 1 bis 15 ‰ umfasst.

8. Anstrich nach einem der vorhergehenden Ansprüche, der ferner ein Verarbeitungshilfsmittel, das ein Wasserrückhalte- und Verdickungsmittel ist, umfasst, wobei das Wasserrückhaltemittel ein Celluloseabkömmling ist.

9. Verfahren zur Herstellung eines Anstrichs nach einem der Ansprüche 1 bis 8, wobei die Bestandteile des Anstrichs in einer beliebigen Reihenfolge gemischt werden.

10. Verfahren zur Herstellung eines Bauteils, das das Anordnen von Gipsbauplatten, die eine Oberseitenschicht vorzugsweise aus Papier aufweisen, nebeneinander, gegebenenfalls das Auflegen eines Bands und das Abdecken der Fuge zwischen den Platten mit einem Anstrich nach einem der Ansprüche 1 bis 8 umfasst.

11. Verfahren nach Anspruch 10, das das Anordnen der Gipsbauplatten nebeneinander, das Füllen des Zwischenraums zwischen den Platten mit einem Füllanstrich, das Auflegen eines Bands, das Abdecken des Bands mit dem Füllanstrich, anschließend das Abdecken des Füllanstrichs mit einem Deckanstrich umfasst, **dadurch gekennzeichnet, dass** der Füllanstrich und/oder der Deckanstrich ein Anstrich nach einem der Ansprüche 1 bis 8 ist.

12. Verfahren nach Anspruch 10, das das Anordnen der Gipsbauplatten nebeneinander, das Auflegen eines selbstklebenden Glasfaser-Gitterbands, das Abdecken des Bands mit dem Füllanstrich, anschließend das Abdecken des Füllanstrichs mit einem Deckanstrich umfasst, **dadurch gekennzeichnet, dass** der Füllanstrich und/oder der Deckanstrich ein Anstrich nach einem der Ansprüche 1 bis 8 ist.

13. Verfahren nach Anspruch 11 oder 12, wobei der Anstrich nach einem der Ansprüche 1 bis 8 der Füllanstrich und der Deckanstrich ist.

## Claims

1. Drying compound comprising, as percentages by weight with respect to the total weight of compound, from 0.5% to 20% by weight of an organic binder and from 50% to 85% of FGD gypsum exhibiting the following particle size characteristics: (i) a d₅₀ of between 36 and 70 µm and (ii) a span (d₉₀ - d₁₀/d₅₀) of less than 2.

2. Compound according to Claim 1, comprising, as percentages by weight with respect to the total weight of compound, from 55% to 75% of gypsum.

3. Compound according to either of Claims 1 and 2, comprising a binder in an amount by weight between 1% and 8% of the total weight of the compound.

4. Compound according to one of Claims 1 to 3, comprising a binder chosen from polyvinyl alcohol homopolymers, (plasticized or nonplasticized) polyvinyl acetate homopolymers, ethylene/vinyl acetate (plasticized or nonplasticized EVAs), ethylene/vinyl versatate or vinyl acetate/vinyl versatate copolymers, polyacrylics, vinyl acetate/acrylic copolymers, styrene/acrylic or styrene/butadiene copolymers, vinyl acetate/vinyl versatate/vinyl maleate or vinyl acetate/vinyl versatate/acrylic terpolymers, acrylic terpolymers and their mixtures.

5. Compound according to one of the preceding claims, additionally comprising a slip agent in an amount of 0.5% to 10%, preferably of 1% to 5%.

6. Compound according to one of the preceding claims, additionally comprising a slip agent comprising a clay and/or talc and/or mica.

7. Compound according to one of the preceding claims, additionally comprising a workability agent which is a water-retaining and thickening agent, in an amount of 1% to 15%.

8. Compound according to one of the preceding claims, additionally comprising a workability agent which is a water-retaining and thickening agent, the water-retaining agent being a cellulose derivative.

9. Process for the preparation of a compound according to one of Claims 1 to 8, in which the constituents of the compound are mixed in any order.

10. Process for the production of a work, comprising the juxtaposition of plasterboards exhibiting a facing, preferably made of paper, optionally the positioning of a tape, and the covering of the joint between the boards by means of a compound according to one of Claims 1 to 8.

11. Process according to Claim 10, comprising the juxtaposition of the plasterboards, the filling of the space between the boards by means of a filling compound, the positioning of a tape, the covering of the tape by means of the filling compound and then the covering of the filling compound with a finishing compound, **characterized in that** the filling compound and/or the finishing compound is a compound according to one of Claims 1 to 8.

12. Process according to Claim 10, comprising the juxtaposition of the plasterboards, the positioning of a self-adhesive glass mesh tape, the covering of the tape by means of the filling compound and then the covering of the filling compound with a finishing compound, **characterized in that** the filling compound and/or the finishing compound is a compound according to one of Claims 1 to 8.

13. Process according to Claim 11 or 12, in which the compound according to one of Claims 1 to 8 is the filling compound and the finishing compound.
